# EUROPÄISCHE PATENTSCHRIFT

(11) **EP 0 948 232 B1**
(45) Veröffentlichungstag und Bekanntmachung des Hinweises auf die Patenterteilung: **25.04.2007**
(21) Anmeldenummer: 98118042.5
(22) Anmeldetag: 23.09.1998
(51) Int. Cl.: H04Q 11/00

(54) **Verfahren zum Schalten einer optischen Schaltmatrix**
Method of switching an optical switching matrix
Méthode de commutation d'une matrice de commutation optique

(30) Priorität: 28.03.1998 DE 19813920
(43) Veröffentlichungstag der Anmeldung: 06.10.1999
(73) Patentinhaber: Ericsson AB, Stockholm (SE)
(72) Erfinder: Mueller-Fiedler, Roland, 71229 Leonberg (DE); Scheuing, Ernst-Ulrich, 71573 Allmersbach (DE); Muehlnikel, Gerd, 71522 Backnang (DE)
(74) Vertreter: Pellkofer, Dieter

(56) Entgegenhaltungen:
- EP-A- 0 457 974
- EP-A- 0 752 795
- US-A- 5 729 642
- QIAO C ET AL: "A TIME DOMAIN APPROACH FOR AVOIDING CROSSTALK IN OPTICAL BLOCKING MULTISTAGE INTERCONNECTION NETWORKS" JOURNAL OF LIGHTWAVE TECHNOLOGY, IEEE. NEW YORK, US, Bd. 12, Nr. 10, 1. Oktober 1994 (1994-10-01), Seiten 1854-1862, XP000469533 ISSN: 0733-8724
- OKAYAMA H ET AL: "OPTICAL SWITCH MATRIX WITH SIMPLIFIED N X N TREE STRUCTURE" JOURNAL OF LIGHTWAVE TECHNOLOGY, IEEE. NEW YORK, US, Bd. 7, Nr. 7, 1. Juli 1989 (1989-07-01), Seiten 1023-1028, XP000053505 ISSN: 0733-8724

## Beschreibung

Die Erfindung betrifft ein Verfahren zum Schalten einer optischen Schaltmatrix mit den im Oberbegriff des Patentanspruchs 1 genannten Merkmalen.

### Stand der Technik

In der optischen Nachrichtentechnik werden üblicherweise Lichtwellenleiter zur Signalübertragung eingesetzt. Diese Lichtwellenleiter müssen zur richtigen Verteilung der Signale an die gewünschten Adressen über eine Vielzahl von Abzweigungen und Kreuzungspunkten, sogenannte Netzknoten, geleitet werden. Um eine variable und flexible Signalverteilung, ein sogenanntes Routing von Nachrichtenverbindungen, zu ermöglichen, werden an den Netzknoten optische Schaltmatrizen eingesetzt, über die gleichzeitig eine Vielzahl von optischen Nachrichtenverbindungen geschaltet werden können. Die optischen Schaltmatrizen besitzen hierzu pro Eingang und pro Ausgang jeweils in einem binären Baum angeordnete optische Schalter, über die jeder Eingang einer Schaltmatrix mit jedem Ausgang der Schaltmatrix verbunden werden kann. Der Aufbau der binären Schaltbäume sowie die hieraus resultierende Anzahl der optischen Schalter ergibt sich aus der Gesamtzahl der Eingänge beziehungsweise Ausgänge der Schaltmatrix. Je nach konstruktivem Aufbau der Schaltmatrizen können unerwünschte Übersprecheffekte zwischen einzelnen mittels der Schaltmatrix zu übertragenen Nachrichtensignalen auftreten, die im ungünstigsten Fall die Nachrichtensignale gegenseitig in unzulässiger Weise beeinflussen und verfälschen können. Diese Effekte treten insbesondere dann auf, wenn diese optischen Schalter in den Schaltmatrizen dauerhaft oder auch nur vorübergehend eine zu geringe Übersprech- beziehungsweise Sperrdämpfung aufweisen.

Die in den optischen Schaltmatrizen vorzugsweise verwendeten digitalen optischen Schalter können je nach Bauart, beispielsweise in Polymertechnik, während des Umschaltvorganges einen Zustand sehr geringer Sperrdämpfung von weniger als 3 dB annehmen. Diese geringe Sperrdämpfung tritt insbesondere bei einem kurzzeitig auftretenden Schaltzustand (Umschaltzustand) auf, bei dem eine Aufteilung der Übertragungsleistung eines zu übertragenen optischen Signals kurzzeitig auf beide Schaltzweige des üblicherweise zwei Schaltstellungen aufweisenden optischen Schalters erfolgt. Auf diese Weise können während eines Umschaltzustandes unkontrollierte und daher unerwünschte Einstreuungen in andere Kanäle entstehen. Eine Vermeidung dieses Problems, das heißt eine signifikante Erhöhung der Sperrdämpfung der einzelnen optischen Schalter auch zu jedem Zeitpunkt während des Umschaltens, ist auf konstruktivem Wege nur mit großem technischen Aufwand erreichbar.

Aus der EP-A-0 457 974 ist eine optische Schaltmatrix mit den im Oberbegriff des Anspruchs 1 genannten Merkmalen bekannt.

In dem Aufsatz "A Time Domain Approach for Avoiding Crosstalk in Optical Blocking Multistage Interconnection Networks" von C. Qiao et al., erschienen in Journal of Lightwave Technology, IEEE, Bd. 12, Nr. 10, Seiten 1854-1863, New York (1994), ISSN 0733-8724, ist ein optisches Breitband-Schaltnetzwerk beschrieben, bei dem unerwünschte Übersprecheffekte dadurch vermieden werden, dass Nachrichtenverbindungen zwischen verschiedenen Eingängen und Ausgängen in unterschiedlichen Zeitschlitzen voneinander getrennt geschaltet werden.

### Vorteile der Erfindung

Das Verfahren zum Schalten einer optischen Schaltmatrix mit den im Patentanspruch 1 genannten Merkmalen bietet den Vorteil, auf einfache Weise eine hohe Übersprech- beziehungsweise Sperrdämpfung zwischen einzelnen, über eine Schaltmatrix zu führende Nachrichtenverbindungen sicherzustellen. Eine Ansteuerung der optischen Schalter der Schaltmatrix erfolgt dabei so, daß zu jedem Zeitpunkt die gewünschte Übersprechdämpfung zwischen den einzelnen geschalteten Nachrichtenverbindungen erhalten bleibt. Beim Aufbau der Schaltmatrix mit in einem eingangs- und ausgangsseitigen binären Baum angeordneten optischen Schaltern werden beim Umschalten einer Verbindung von einem geschalteten Pfad auf einen anderen Pfad, das heißt, beim Schalten einer neuen Verknüpfung zwischen wenigstens einem der Eingänge und wenigstens einem der Ausgänge der Schaltmatrix, zunächst wenigstens ein dem neuen Pfad zuzuordnender optischer Schalter, vorzugsweise die beiden optischen Schalter, die sich den entsprechenden Eingängen beziehungsweise Ausgängen jeweils am nächsten befinden, nicht in ihrem Schaltzustand geändert. Der neue Pfad wird bis auf den wenigstens einen optischen Schalter, vorzugsweise den ersten und/oder letzten optischen Schalter des neuen Pfades aufgebaut und erst durch nachfolgendes Betätigen dieses beziehungsweise dieser Schalter durchgeschaltet. Danach kann der bisher geschaltete Pfad innerhalb der Schaltmatrix abgebaut werden. Bei diesem Verfahren bleibt ein Umschaltvorgang ohne negative Auswirkungen auf das Übersprechverhalten, wodurch keine andere Nachrichtenverbindung innerhalb der Schaltmatrix unzulässig beeinflußt wird. Dies ist vorteilhaft möglich, da die Umschaltung der optischen Schalter zum Aufbau des neuen Pfades in einem Betriebszustand erfolgt, bei dem diese eine Übertragung der optischen Signale der jeweiligen Nachrichtenverbindung noch nicht aufgenommen haben. Die vorübergehende Aufteilung der Übertragungsleistung der optischen Signale während des Umschaltvorganges der optischen Schalter auf die Schaltzweige der Schalter, die zu dem störenden Übersprechen führen, wird so verhindert.

In bevorzugter Ausgestaltung der Erfindung ist vorgesehen, daß die Umschaltung auf die neue Verknüpfung über einen, den Eingängen und/oder Ausgängen und/oder festen Verbindungen der Schaltmatrix zugeordneten optischen Schalter erfolgt. Hierdurch kann eine vorhandene Ansteuerlogik einer vorhandenen Schaltmatrix unverändert bleiben. Die erfindungsgemäße Umschaltung wenigstens einer Verknüpfung der Schaltmatrix erfolgt jeweils über eine zusätzliche Ansteuerung der zusätzlichen Schalter. Auch hiermit wird ein Übersprechen zwischen mehreren gleichzeitig über die Schaltmatrix übertragenen Nachrichtenverbindungen vermieden.

Weitere vorteilhafte Ausgestaltungen der Erfindung ergeben sich aus den übrigen, in den Unteransprüchen genannten, Merkmalen.

### Zeichnungen

Die Erfindung wird nachfolgend in einem Ausführungsbeispiel anhand der zugehörigen Zeichnungen näher erläutert. Es zeigen:
- Figur 1: eine schematische Darstellung der Verschaltung einer optischen Schaltmatrix und
- Figur 2: eine schematische Darstellung des erfindungsgemäßen Verfahrens zum Schalten einer optischen Schaltmatrix.

### Beschreibung des Ausführungsbeispiels

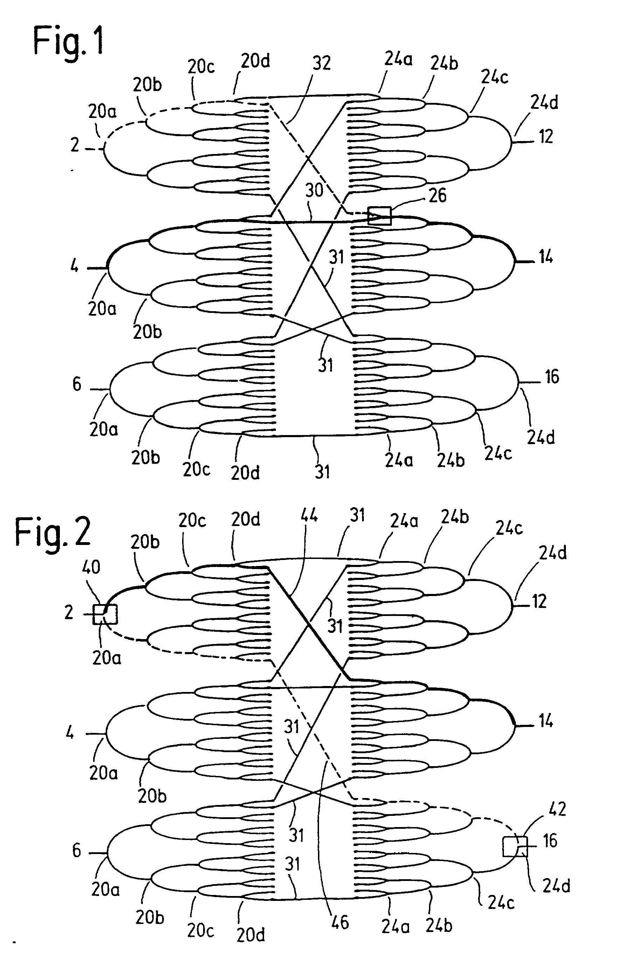

Figur 1 zeigt in einer schematischen Darstellung einen Ausschnitt einer optischen Schaltmatrix mit hier beispielhaft ausgewählten drei Eingängen 2, 4, 6, die jeweils mit hier nicht dargestellten Lichtwellenleitern gekoppelt sind. Die Eingänge 2, 4, 6 können mittels einer Vielzahl von beispielsweise elektrisch ansteuerbaren optischen Schaltern 20 und optischen Schaltern 24 auf drei Ausgänge 12, 14, 16 mit daran angekoppelten Lichtwellenleitern geschaltet werden.

In der optischen Schaltmatrix ist an jedem der drei Eingänge 2, 4, 6 jeweils ein optischer Schalter 20a vorgesehen, der jeweils zwei Ausgänge besitzt. Diesen beiden Ausgängen sind wiederum jeweils zwei Schalter 20b nachgeordnet, die jeweils zwei Ausgänge aufweisen. Auf diese Weise sind mehrere Schaltebenen (Schalter 20a, 20b, 20c, 20d - jeweils nur einmal bezeichnet) hintereinandergeschaltet beziehungsweise kaskadiert, so daß eine immer weitere Aufteilung eines Schaltweges zu einem sogenannten binären Baum erfolgt. Für die Verschaltung beziehungsweise Verknüpfung der hier dargestellten drei Eingänge 2, 4, 6 mit den dargestellten drei Ausgängen 12, 14, 16 sind selbstverständlich nicht die dargestellten vier Schaltebenen pro Eingang beziehungsweise Ausgang notwendig. Es soll damit angedeutet werden, daß die dargestellte Schaltmatrix lediglich einen Ausschnitt aus einem größeren Netzwerk mit einer Vielzahl von möglichen Eingängen und Ausgängen zeigt, wobei die Anzahl der Eingänge und die Anzahl der Ausgänge die Anzahl der Schaltebenen bestimmt, so daß jeder Eingang durch Aufbau eines entsprechenden Schaltweges mit jedem Ausgang der Schaltmatrix verbindbar ist.

Gemäß dem in Figur 1 dargestellten Ausführungsbeispiel sind die Schalter 20a, 20b, 20c, 20d jeweils individuell von einem Eingang auf zwei Ausgänge umschaltbar. Die Schalter 24a, 24b, 24c, 24d sind entsprechend jeweils individuell von zwei Eingängen auf einen Ausgang umschaltbar. Ebenso möglich sind Schalter mit jeweils drei oder mehr Schaltstellungen, für die das erfindungsgemäße Verknüpfungsverfahren in gleicher Weise anwendbar ist. Nach weiteren, nicht dargestellten Ausführungsbeispielen kann eine Signalübertragung über die Schaltmatrix bidirektional erfolgen, so daß eine Übertragung von Signalen und somit eine Schaltung der Schalter 20 und 24 der Schaltmatrix auch in entgegengesetzter Richtung möglich ist.

Die in Figur 1 dargestellte optische Schaltmatrix 1 arbeitet entsprechend einem bekannten Verzweigungsschema, aus dem eine relativ geringe Übersprech- beziehungsweise Sperrdämpfung zwischen den übertragenen optischen Signalen resultiert. Die Schalter 20a, 20b, 20c, 20d beziehungsweise 24a, 24b, 24c, 24d sind in der schematischen Darstellung der Figur 1 lediglich als Verzweigungspunkte der sogenannten binären Bäume angedeutet. An jedem solchen Verzweigungspunkt kann jeder der Schalter 20a, 20b, 20c, 20d beziehungsweise 24a, 24b, 24c, 24d auf einen der beiden Zweige umgeschaltet werden, wodurch der Verlauf von einzelnen über Lichtwellenleiter zu den optischen Eingängen 2, 4, 6 geleiteten Nachrichtenverbindungen in der optischen Schaltmatrix festgelegt ist. Bezeichnet ist weiterhin ein umrahmter Verzweigungspunkt beziehungsweise optischer Schalter 26 in einem Ausgangszweig, der zwischen zwei Pfaden umschalten soll.

Im gezeigten Ausführungsbeispiel wird zwischen einem über den optischen Eingang 2 einkommenden Pfad (punktierte Linie 32) und einem über den optischen Eingang 4 einkommenden Pfad (stark ausgezogene Linie 30) umgeschaltet. Während dieses Umschaltvorganges tritt das erwähnte Problem einer zu geringen Übersprech- beziehungsweise Sperrdämpfung im optischen Schalter (hier Schalter 26) bekannter Bauart, bedingt durch dessen konstruktiven Aufbau, auf. So gelangen am Ausgang 14 während des Umschaltvorganges des Schalters 26 kurzzeitig sowohl die vom Eingang 2 kommenden Signale (punktierte Linie 32) als auch die vom Eingang 4 kommenden Signale (stark ausgezogene Linie 30) an und überlagern sich dabei.

In der Figur 1 sind weitere Linien 31 für beispielhaft geschaltete und sich kreuzende Pfade eingezeichnet, die jedoch auf die Umschaltvorgänge im Schalter 26 keinen weiteren Einfluß haben. Die Linien 31 beziehungsweise die Pfade stellen feste Verbindungen zwischen den eingangsseitigen Schaltausgängen der Schalter 20d und ausgangsseitigen Schalteingängen der Schalter 24a dar, wobei zur besseren Übersichtlichkeit nur einige Verbindungen, nämlich die für die gezeigten drei Eingänge 2, 4, 6 und drei Ausgänge 12, 14, 16, eingezeichnet sind. Es soll damit verdeutlicht werden, daß gleichzeitig eine Vielzahl von eingehenden Signalen auf die Ausgänge 12, 14, 16 und weitere, hier nicht dargestellte, Ausgänge unterschiedlich geschaltet und verknüpft werden können.

Anhand von Figur 2 wird das erfindungsgemäße Verfahren zum Schalten der optischen Schaltmatrix erläutert. Gleiche Teile wie in Figur 1 sind mit gleichen Bezugszeichen versehen und nicht nochmals erläutert. Der hier dargestellte Aufbau mit jeweils drei optischen Eingängen 2, 4, 6 und optischen Ausgängen 12, 14, 16 sowie einer Vielzahl von optischen Schaltern 20a, 20b, 20c, 20d sowie 24a, 24b, 24c, 24d zur beliebigen Verschaltung beziehungsweise Verknüpfung der Schaltmatrix entspricht dem Aufbau nach Figur 1. Je Eingang und je Ausgang der Schaltmatrix sind sechzehn Kanäle (Linien 31) zugeordnet, so daß die Schaltmatrix gemäß dem Ausführungsbeispiel insgesamt sechzehn Eingänge und sechzehn Ausgänge besitzt.

Die stark ausgezogene Linie 44 kennzeichnet eine geschaltete Verknüpfung vor einem Umschaltvorgang, die punktierte Linie 46 zeigt eine geschaltete Verknüpfung nach dem Umschaltvorgang. Durch eine Umrahmung hervorgehoben ist ein erster optischer Schalter 40 direkt hinter dem Eingang 2. Für eine gute Übersprech- beziehungsweise Sperrdämpfung zwischen den zu übertragenen Signalen wird der Pfad 46 zunächst mittels der optischen Schalter 20 und 24 aufgebaut beziehungsweise durchgeschaltet, während der Pfad 44 noch geschaltet bleibt. Erst zum Schluß, das heißt, wenn alle Schalter 20b, 20c, 20d, 24a, 24b, 24c und 24d des neuen Pfades 46 geschaltet sind, wird der Schalter 40 (Schalter 20a) am optischen Eingang 2 umgeschaltet, wodurch vom Pfad 44 auf den Pfad 46 gewechselt wird. Der Eingang 2 ist nunmehr mit dem Ausgang 16 und nicht mehr mit dem Ausgang 14 verbunden.

Der bisher geschaltete Pfad 44 kann nach dem Umschalten auf den neuen Pfad 46 durch entsprechende Betätigung der dem Pfad 44 zugeordneten Schalter abgebaut werden. Ein fließender Umschaltvorgang zwischen den Pfaden 44 und 46 stellt somit kein Problem hinsichtlich eines Übersprechens dar, und es wird keine andere Nachrichtenverbindung innerhalb der Schaltmatrix unzulässig beeinflußt.

Weiterhin besteht die Möglichkeit, den mit 42 bezeichneten Schalter (Schalter 24d) am Ausgang 16 in die Umschaltung auf den neuen Pfad 46 mit einzubeziehen, und zunächst nur die Schalter 20b, 20c, 20d, 24a, 24b und 24c des neuen Pfades 46 durchzuschalten. Erst im Anschluß erfolgt die Umschaltung auf den Pfad 46 durch Betätigen der Schalter 40 (Schalter 20a) und Schalter 42 (Schalter 24d).

Nach weiteren Ausführungsbeispielen können zusätzliche Schaltelemente vorgesehen sein, die den Eingängen 2, 4 und 6 und/oder den Ausgängen 12, 14 und 16 zugeordnet sind. Über diese zusätzlichen Schaltelemente erfolgt dann das Umschalten der gewünschten Pfade innerhalb der Schaltmatrix, nachdem der neue Pfad über die Schalter 20 beziehungsweise 24 aufgebaut ist. Die zusätzlichen Schaltelemente können auch den festen Verbindungswegen (Linien 31) innerhalb der Schaltmatrix zugeordnet sein.

## Patentansprüche

1. Verfahren zum Schalten einer optischen Schaltmatrix, die zur Koppelung von wenigstens zwei eingehenden Lichtwellenleitern mit wenigstens zwei abgehenden Lichtwellenleitern für jeden eingehenden Lichtwellenleiter einen Eingang und für jeden abgehenden Lichtwellenleiter einen Ausgang aufweist, wobei jeder der wenigstens zwei Eingänge, mittels in wenigstens einem binären Baum angeordneten, kaskadierten optischen Schaltern, mit jedem der wenigstens zwei Ausgänge koppelbar ist, **dadurch gekennzeichnet, daß** die optischen Schalter (20a, 20b, 20c, 20d, 24a, 24b, 24c, 24d, 40, 42) derart ansteuerbar sind, daß bei einer Änderung der Verknüpfung zwischen wenigstens einem der Eingänge (2, 4, 6) der Schaltmatrix mit wenigstens einem der Ausgänge (12, 14, 16) der Schaltmatrix die ursprüngliche Verknüpfung (44) zunächst bestehen bleibt, die neue Verknüpfung (46) bis auf wenigstens einen, der neuen Verknüpfung (46) zugeordneten Schalter (40, 42) aufgebaut wird, und über den wenigstens einen Schalter (40, 42) die Umschaltung auf die neue Verknüpfung (46) erfolgt, nachdem die neue Verknüpfung (46) innerhalb der Schaltmatrix aufgebaut ist.

2. Verfahren nach Anspruch 1, **dadurch gekennzeichnet, daß** die neue Verknüpfung (46) bis auf den am Schaltvorgang beteiligten und dem Eingang (2, 4, 6) am nächsten liegenden Schalter (40) und/oder den dem Ausgang (12, 14, 16) am nächsten liegenden Schalter (42) geschaltet wird, und daß die neue Verknüpfung (46) durch Umschalten des ersten am Schaltvorgang beteiligten Schalters (40) und/oder des letzten am Schaltvorgang beteiligten Schalters (42) hergestellt wird.

3. Verfahren nach Anspruch 2, **dadurch gekennzeichnet, daß** bei einer Änderung der Verknüpfung der erste am Schaltvorgang beteiligte Schalter (40) und der letzte am Schaltvorgang beteiligte Schalter (42) gleichzeitig betätigt werden.

4. Verfahren nach Anspruch 2, **dadurch gekennzeichnet, daß** der letzte am Schaltvorgang beteiligte Schalter (42) in den Aufbau einer neuen Verknüpfung (46) miteinbezogen wird, wobei die Umschaltung zur neuen Verknüpfung (46) nur mit dem ersten am Schaltvorgang beteiligten Schalter (40) erfolgt.

5. Verfahren nach Anspruch 1, **dadurch gekennzeichnet, daß** die Umschaltung auf die neue Verknüpfung (46) über einen, den Eingängen (2, 4, 6) und/oder den Ausgängen (12, 14, 16) und/oder festen Verbindungen (31) der Schaltmatrix zugeordneten optischen Schalter erfolgt.

## Claims

1. A method for the switching of an optical switch matrix which, for the coupling of at least two ingoing light waveguides to at least two outgoing light waveguides, has an input for each ingoing light waveguide and an output for each outgoing light waveguide, with each of the at least two inputs being able to be coupled to each of the at least two outputs by means of cascaded optical switches arranged in at least one binary tree, **characterised in that** the optical switches (20a, 20b, 20c, 20d, 24a, 24b, 24c, 24d, 40, 42) can be controlled such that, on a change in the link between at least one of the inputs (2, 4, 6) of the switch matrix to at least one of the outputs (12, 14, 16) of the switch matrix, the original link (44) is initially maintained, the new link (46) is built up, with the exception of at least one switch (40, 42) associated with the new link (46) and the changeover to the new link (46) takes place via the at least one switch (40, 42) after the new link (46) has been built up within the switch matrix.

2. A method in accordance with claim 1, **characterised in that** the new link (46) is switched, with the exception of the switch (40) taking part in the switch procedure and disposed closest to the input (2, 4, 6) and/or the switch (42) disposed closest to the output (12, 14, 16); and **in that** the new link (46) is established by changing over the first switch (40) taking part in the switch procedure and/or the last switch (42) taking part in the switch procedure.

3. A method in accordance with claim 2, **characterised in that**, on a change in the link, the first switch (40) taking part in the switch procedure and the last switch (42) taking part in the switch procedure are activated simultaneously.

4. A method in accordance with claim 2, **characterised in that** the last switch (42) taking part in the switch procedure is involved in the setting up of a new link (46), with the changeover to the new link (46) only taking place using the first switch (40) taking part in the switch procedure.

5. A method in accordance with claim 1, **characterised in that** the changeover to the new link (46) takes place via an optical switch associated with the inputs (2, 4, 6) and/or the outputs (12, 14, 16) and/or fixed connections (31) of the switch matrix.

## Revendications

1. Procédé pour commuter une matrice de commutation optique qui, pour le couplage d'au moins deux guides d'ondes entrants à au moins deux guides d'ondes sortants, comprend une entrée pour chaque guide d'onde entrant et une sortie pour chaque guide d'onde sortant, chacune desdites au moins deux entrées pouvant être accouplée à chacune desdites au moins deux sorties, au moyen de commutateurs optiques en cascade agencés dans au moins une arborescence binaire,
**caractérisé en ce que** les commutateurs optiques (20a, 20b, 20c, 20d, 24a, 24b, 24c, 24d, 40, 42) sont susceptibles d'être pilotés de telle façon que lors d'une modification du chaînage entre au moins l'une des entrées (2, 4, 6) de la matrice de commutation et l'une au moins des sorties (12, 14, 16) de la matrice de commutation, le chaînage initial (44) reste tout d'abord établi, le nouveau chaînage (46) est élaboré, à l'exception d'au moins un commutateur (40, 42) associé au nouveau chaînage (46), et la commutation vers le nouveau chaînage (46) a lieu via ledit au moins un commutateur (40, 42), après avoir établi le nouveau chaînage (46) à l'intérieur de la matrice de commutation.

2. Procédé selon la revendication 1, **caractérisé en ce que** le nouveau chaînage (46) est commuté à l'exception du commutateur (40) participant à l'opération de commutation et situé le plus proche de l'entrée (2, 4, 6) et/ou du commutateur (42) situé le plus proche de la sortie (12, 14, 16), et **en ce que** le nouveau chaînage (46) est établi par commutation du premier commutateur (40) participant à l'opération de commutation et/ou par le dernier commutateur (42) participant à l'opération de commutation.

3. Procédé selon la revendication 2, **caractérisé en ce que**, lors d'une modification du chaînage, le premier commutateur (40) participant à l'opération de commutation et le dernier commutateur (42) participant à l'opération de commutation sont actionnés simultanément.

4. Procédé selon la revendication 2, **caractérisé en ce que** le dernier commutateur (42) participant à l'opération de commutation est intégré dans l'élaboration d'un nouveau chaînage (46), et la commutation vers le nouveau chaînage (46) a lieu uniquement avec le premier commutateur (40) participant à l'opération de commutation.

5. Procédé selon la revendication 1, **caractérisé en ce que** la commutation vers le nouveau chaînage (46) a lieu par l'intermédiaire d'un commutateur optique associé aux entrées (2, 4, 6) et/ou aux sorties (12, 14, 16) et/ou à des liaisons fixes (31) de la matrice de commutation.
